# EUROPEAN PATENT APPLICATION

(11) **EP 1 944 503 A2**
(43) Date of publication of application: **16.07.2008**
(21) Application number: 07380389.2
(22) Date of filing: 27.12.2007
(51) Int. Cl.: F02P 7/00

(54) **Automated process for verifying the timing of an internal combustion engine**

(30) Priority: 28.12.2006 ES 200603298 U
(71) Applicant: Seat, S.A., 08760 Martorell (ES)
(72) Inventor: Ferrairo Vercher, Antonio c/o Seat, S.A., 08760 Martorell (Barcelona) (ES); Gallego Ruiz, Miguel Angel c/o Seat, S.A., 08760 Martorell (Barcelona) (ES)
(74) Representative: Carvajal y Urquijo, Isabel

(57) **Abstract**

The invention relates to an automated process for verifying the timing of an internal combustion engine, comprising at least the following steps:
- locating the upper dead center of the engine;
- entering the calibration data of the sensors used;
- entering the parameters corresponding to the data file;
- configuring the test;
- starting the test;
- displaying the results in real time;
- ending the test;
and its object is to obtain data with a higher degree of reliability and accuracy, as well as to reduce the time used in said process.

## Description

### Object of the Invention

The object of this automated process is to create a new process for measuring the ignition timing in Otto and Diesel type internal combustion engines, to obtain data with a higher degree of reliability and accuracy, as well as to reduce the time used in said process.

The field of the art in which the present invention is comprised is that of the manufacturing and quality control process in the automobile industry.

### Background of the Invention

The first mechanical component of the timing kinematic chain is the crankshaft and the last component is the valve of the combustion chamber. The ratio established between the former, which is the rotated angle, and the latter, which is the displacement angle, are the timing data.

The process for verifying the ignition timing is currently carried out manually. Analog devices, normally comparing clocks, are used in this process, although their digital versions can also be used. An angle measuring disc is used to calculate the angle rotated by the crankshaft.

This solution has a series of drawbacks. The first drawback is that the accuracy is logically limited by the analog elements used. The second drawback lies in the critical importance of the human factor, which affects the measurement in a very significant manner, introducing a very important variable in the error function.

In the same way, since it is a manual process, the measurement time is much longer than in an automatic process, which involves greater costs.

### Description of the Invention

The automated process for verifying the ignition timing of an internal combustion engine, object of the present invention, is set forth to palliate, or where appropriate, to eliminate the aforementioned drawbacks.

The automatic system in which the process object of the invention is implemented comprises:
- Assembly means, in turn comprising at least:
   o A plurality of calibrated rods.
   o A plurality of securing clamps.
   o A timing chain tensioner.
- Sensing means, in turn comprising at least:
   o A plurality of linear sensors.
   o A rotary sensor.
- Actuation means, in turn comprising at least:
   o An electric motor.
- Logic signal processing and control means, in turn comprising at least:
   o A reconfigurable logic real-time acquisition and control element.
   o A computer.
Wherein the calibrated rods fix the sensors and provide rigidity to the structure. In the case of the linear sensors, the first rod is threaded into the same threaded holes in which the cylinder head cover is housed. In contrast, the first rod which is used to place the rotary sensor is threaded to the same engine block at the side of the crankshaft output.

The clamps are the joining element between two calibrated rods. Two clamps are used for this joining, whereby the same functionality is achieved as a ball joint which allows the movement of the second rod with six degrees of freedom. The final assembly tool, which is the sensor supporting element supporting and placing the sensors, is threaded at the end of the last rod.

In the case of the linear sensors, the supporting element must be completely parallel to the plate of the cylinder head cover so that the measurement is correct. In contrast, the securing clamp of the rotary sensor must be perpendicular to the axis of rotation of the crankshaft.

This system allows simply and quickly connecting as many rods as necessary until reaching the point at which the measuring element is to be placed. In addition, it is a versatile system because it can be adapted to any cylinder head and block structure. The only elements varying from one engine to another is the linear sensor supporting element, because they have an inclined hole into which the sensor is introduced, in which the inclination varies according to the engine.

Due to the fact that the timing in an engine can vary, a timing chain tensioner preventing the offset between the intake camshaft with respect to the exhaust camshaft has been used, it is thus achieved that the system is stable and the measurement corresponds to zero offset between the two camshafts and with much more coherent and useful results, since the results are vague with variable timing.

Two of the linear sensors are placed on the camshaft and are used to measure the displacement of the valves; one for the intake valve and the other one for the exhaust valve. According to whether the feeler of the sensor is in contact with the cam or with the valve lifter, the contact part of the sensor, or feeler, is a plane or a tip, respectively. For the same reason, it must be taken into account that there is a 180º offset between the cam and the valve lifter so that the program carries out the calculation.

The third linear sensor is placed right above the cylinder because a feeler supported on the piston head is placed through the hole of the spark plug of the first cylinder and the linear sensor is treaded at its upper end.

The object of this sensor is to be able to accurately determine the position of the upper dead center, this measurement can be verified because all engines have a mark in the pulley of the crankshaft and in the engine which, when they coincide, indicates that the piston is approximately located at the upper dead center.

The rotary sensor is located right in front of and joined to the shaft of the crankshaft. To join the sensor to the shaft of the crankshaft, a deformable joint which can be made of rigid rubber, a spring or a double constant-velocity universal joint is used, the function of which is to absorb the small deviation existing between the shaft of the crankshaft and that of the sensor, whereby the radial load which would be created if the joining were completely rigid and the shafts were not completely collinear and which would cause a rapid deterioration of the delicate bearings of the sensor would disappear.

The electric motor is the actuator whereby the crankshaft is rotated, because it must be geared with the crown of the crankshaft; the electric motor is controlled by the reconfigurable logic real-time acquisition and control element.

The reconfigurable logic real-time acquisition and control element is the device responsible for controlling and storing the different signals coming from the sensors as well as its real-time processing. The computer contains a specific software for entering process instructions and variables; these variables are executed by the reconfigurable logic acquisition and control element. Likewise, the results are displayed on the computer in real time of the process, therefore after carrying out such process the results will be analyzed to be able to determine the characteristics of the ignition timing.

The automated process for verifying the ignition timing in an internal combustion engine, object of the present invention comprises at least the following steps:
- Locating the upper dead center of the engine (hereinafter udc).
- Entering the calibration data of the sensors used.
- Entering the name and the location of the test data file.
- Configuring the test.
- Starting the test
- Displaying the results in real time.
- Ending the test.
Wherein the step of locating the upper dead center of the engine comprises at least the following steps:
- Placing the engine in its approximate upper dead center, aligning the mark of the pulley of the crankshaft with the mark of the engine. The movement of the electric motor is controlled by means of the control panel, whereby the movement of the crankshaft is achieved.
- Placing a feeler of the linear sensor to be contacted with the piston head through the hole of the spark plug of the first cylinder.
- Housing and securing the corresponding linear displacement sensor in the corresponding support to measure the stroke of the piston.
- Searching for the upper dead center of the engine.
- Detecting the upper dead center of the engine and stopping the test.
- Checking that the upper dead center has been correctly calculated, i.e. that the marks of the pulley and the engine are aligned with a tolerance of ± 1.5°.
- If the upper dead center of the engine has not been correctly calculated, repeating the steps of the subprocess.
- If the upper dead center has been correctly calculated, i.e. the marks are correctly aligned with a tolerance of ± 1.5°, the sensor measuring the displacement of the piston and the specific tip for the piston are removed.
- Placing this sensor (lineal displacement) in the support corresponding to the first intake valve and the tip necessary for the test to be carried out.

In the step of calibrating the sensors used, the amount of pulses generated by one of the signals of the sensor in one turn for the angular sensors and pulses per millimeter for the linear sensors are entered in the control panel.

In the step of entering the parameters corresponding to the data file, the name and the filing path of the test results are indicated.

Once these steps have been completed, the test is ready to be started.

The step of configuring the test comprises at least the following steps:
- Indicating the number of pairs of initiation turns that the engine will rotate before starting to record data.
- Indicating the start-of-record position. Zero corresponds to the upper dead center.
- Indicating the end-of-record position. Absolute final position in which recording will end.
- Indicating the location of the linear feeler. Selecting valve lifter if the location of the feeler on the latter has been possible. Selecting cam if the feeler has been placed on the cam in a plane parallel to the valve lifter.
- Indicating automatic / manual work mode, in which the parameters must be manually configured by the user if manual is selected. If automatic is selected, the test configuration parameters are set to predetermined values.

Once the test has been correctly configured, the step of executing the test in the computer is started.

In the step of displaying, the different data obtained are shown in graphic indicators and numerical indicators on the computer.

The test will end at the time desired by the user.

The present innovation complies with the objectives of measuring the ignition timing of the internal combustion engine with greater reliability and accuracy. The automation of the test reduces the time used by half and the possibility of making mistakes is minimized.

With the present innovation, the clearance between the bearing of the big end and the pin, also between the bearing of the small end and the crankshaft, can be accurately determined.

This device is very easy to assemble, and is quickly and easily adapted to any engine.

### Preferred Embodiment of the Invention

A preferred embodiment of the automated process for verifying the distribution of an Otto or Diesel type internal combustion engine comprises at least the following steps:
- locating the upper dead center of the engine;
- entering the calibration data of the sensors used;
- entering the parameters corresponding to the data file;
- configuring the test;
- starting the test;
- displaying the results in real time;
- ending the test;
wherein these steps are implemented in a system comprising at least:
- assembly means, in turn comprising at least:
   o a plurality of calibrated rods;
   o a plurality of securing clamps;
   o a timing chain tensioner;
- sensing means, in turn comprising at least:
   o a plurality of linear sensors;
   o a rotary sensor;
- actuation means, in turn comprising at least:
   o an electric motor;
- logic signal processing and control means, in turn comprising at least:
   o a reconfigurable logic real-time acquisition and control element;
   o a computer;
wherein the computer and the logic elements are connected to one another; receiving the signals coming from the sensing means and sending the orders to the actuation means.

The step of locating the upper dead center of the engine comprises at least the following steps:
- Placing the engine in its approximate upper dead center, aligning the mark of the pulley of the crankshaft with the mark of the engine. The movement of the electric motor is controlled by means of the control panel, whereby the movement of the crankshaft is achieved.
- Placing a feeler of the linear sensor to be contacted with the piston head through the hole of the spark plug of the first cylinder.
- Housing and securing the linear displacement sensor in the corresponding support to measure the stroke of the piston.
- Searching for the upper dead center of the engine.
- Detecting the upper dead center of the engine and stopping the test.
- Checking that the upper dead center has been correctly calculated, i.e. that the marks of the pulley and the engine are aligned with a tolerance of ± 1.5°. In the event that the upper dead center of the engine has not been correctly calculated, repeating the steps of the subprocess.

In the step of calibrating the sensors used, the amount of pulses per turn for the angular sensors and pulses per millimeter for the linear sensors are indicated to the system; and in the step of entering the parameters corresponding to the data file, the name and the filing path of the test results are indicated.

The step of configuring the test comprises at least the following steps:
- indicating the number of pairs of initiation turns that the engine will rotate before starting to record data;
- indicating the start-of-record position, which is the zero corresponding to the upper dead center;
- indicating the end-of-record position; which is the absolute final position in which recording will end;
- indicating the location of the linear feeler; wherein one of the following options has to be selected:
   o valve lifter option: if the location of the feeler on the latter has been possible;
   o cam option: if the feeler has been placed on the cam in a plane parallel to the valve lifter;
- indicating the work mode, one mode selected from:
   o automatic: the test configuration parameters are set to predetermined values;
   o manual: the parameters must be manually configured by the user.

Once the test has been started, the different data obtained from the sensing means are displayed in graphic indicators and numerical indicators to the user; and the test will end at the time desired by the user.

## Claims

1. An automated process for verifying the timing of an internal combustion engine, **characterized in that** comprises at least the following steps:
- locating the upper dead center of the engine;
- entering the calibration data of the sensors used;
- entering the parameters corresponding to the data file;
- configuring the test;
- starting the test;
- displaying the results in real time;
- ending the test;
wherein these steps are implemented in a system comprising at least:
- assembly means, in turn comprising at least:
o a plurality of calibrated rods;
o a plurality of securing clamps;
o a timing chain tensioner;
- sensing means, in turn comprising at least:
o a plurality of linear sensors;
o a rotary sensor;
- actuation means, in turn comprising at least:
o an electric motor;
- logic signal processing and control means, in turn comprising at least:
o a reconfigurable logic real-time acquisition and control element;
o a computer;
wherein the computer and the logic element are connected to one another, receiving the signals coming from the sensing means and sending the orders to the actuation means.

2. An automated process for verifying the timing of an internal combustion engine according to claim 1, **characterized in that** the step of locating the upper dead center of the engine comprises at least the following steps:
- Placing the engine in its approximate upper dead center, aligning the mark of the pulley of the crankshaft with the mark of the engine. The movement of the electric motor is controlled by means of the control panel, whereby the movement of the crankshaft is achieved.
- Placing a feeler of the linear sensor to be contacted with the piston head through the hole of the spark plug of the first cylinder.
- Housing and securing the linear displacement sensor in the corresponding support to measure the stroke of the piston.
- Searching for the upper dead center of the engine.
- Detecting the upper dead center of the engine and stopping the test.
- Checking that the upper dead center has been correctly calculated, i.e. that the marks of the pulley and the engine are aligned with a tolerance of ± 1.5°, in the event that the upper dead center of the engine has not been correctly calculated, repeating the steps of the subprocess.

3. An automated process for verifying the timing of an internal combustion engine according to claim 1, **characterized in that** in the step of calibrating the sensors used, the amount of pulses per turn for the angular sensors and pulses per millimeter for the linear sensors are indicated to the system; and wherein in the step of entering the parameters corresponding to the data file, the name and the filing path of the test results are indicated.

4. An automated process for verifying the timing of an internal combustion engine according to claim 1, **characterized in that** the step of configuring the test comprises at least the following steps:
- indicating the number of pairs of initiation turns that the engine will rotate before starting to record data;
- indicating the start-of-record position, which is the zero corresponding to the upper dead center;
- indicating the end-of-record position; which is the absolute final position in which recording will end;
- indicating the location of the linear feeler; wherein one of the following options has to be selected:
o valve lifter option: if the location of the feeler on the latter has been possible;
o cam option: if the feeler has been placed on the cam in a plane parallel to the valve lifter;
- indicating the work mode, one mode selected from:
o automatic: the test configuration parameters are set to predetermined values;
o manual: the parameters must be manually configured by the user.

5. An automated process for verifying the timing of an internal combustion engine according to claim 1, **characterized in that** once the test has been started, the different data obtained from the sensing means are displayed in graphic indicators and numerical indicators to the user; and wherein the test will end at the time desired by the user.
